# EUROPÄISCHE PATENTSCHRIFT

(11) **EP 1 750 893 B1**
(45) Veröffentlichungstag und Bekanntmachung des Hinweises auf die Patenterteilung: **01.07.2009**
(21) Anmeldenummer: 05738241.8
(22) Anmeldetag: 09.05.2005
(51) Int. Cl.: B23K 26/14, B23K 26/32, B23K 26/24, B23K 28/02, B23K 9/173, B23K 35/30, B23K 35/02

(54) **LASER-HYBRID-SCHWEISSVERFAHREN UND -SCHWEISSBRENNER MIT VERWENDUNG EINES DRAHTES MIT ZINK- UND/ODER KOHLENSTOFF- UND/ODER ALUMINIUMGEHALT**
LASER HYBRID WELDING METHOD AND LASER HYBRID WELDING TORCH USING A ZINC AND/OR CARBON AND/OR ALUMINUM-CONTAINING ROD
PROCEDE ET TORCHE DE SOUDAGE LASER HYBRIDE AVEC UTILISATION D'UN FIL CONTENANT DU ZINC, DU CARBONE ET/OU DE L'ALUMINIUM

(30) Priorität: 10.05.2004 AT 8022004
(43) Veröffentlichungstag der Anmeldung: 14.02.2007
(60) Teilanmeldung: 07007304.4
(73) Patentinhaber: Fronius International GmbH, 4643 Pettenbach (AT)
(72) Erfinder: MIESSBACHER, Gerhard, A-4600 Thalheim/Wels (AT); RÜHRNÖSSL, Manfred, A-4030 Linz (AT)
(74) Vertreter: Sonn & Partner Patentanwälte
(86) Internationale Anmeldenummer: PCT/AT2005/000156
(87) Internationale Veröffentlichungsnummer: WO 2005/107996

(56) Entgegenhaltungen:
- WO-A-01/17722
- WO-A-97/37808
- WO-A-03/031111
- US-A1- 2003 136 768
- PATENT ABSTRACTS OF JAPAN Bd. 2002, Nr. 10, 10. Oktober 2002 (2002-10-10) -& JP 2002 160082 A (NKK CORP), 4. Juni 2002 (2002-06-04)
- ANONYMOUS: "Fülldrahtelektrode ohne Slacke für verzinkte Bleche" INTERNET ARTICLE, [Online] Juli 2003 (2003-07), XP002337862 Gefunden im Internet: URL:HTTP://WWW.OERLIKON.DE/DOWNLOAD/DEUTSC H/FUELLDRAHTELEKTRODEN/METALLUNLEGIERT/SAF DUAL_ZN.PDF>
- DATABASE WPI Section Ch, Week 199816 Derwent Publications Ltd., London, GB; Class M23, AN 1998-173168 XP002337869 -& JP 10 034379 A (DAIDO TOKUSHUKO KK - TOYOTA JIDOSHA KK) 10. Februar 1998 (1998-02-10)
- PATENT ABSTRACTS OF JAPAN Bd. 2003, Nr. 12, 5. Dezember 2003 (2003-12-05) -& JP 2004 223548 A (DAIHEN CORP), 12. August 2004 (2004-08-12)
- PATENT ABSTRACTS OF JAPAN Bd. 009, Nr. 279 (M-427), 7. November 1985 (1985-11-07) -& JP 60 121093 A (MITSUBISHI HEAVY IND LTD), 28. Juni 1985 (1985-06-28)

## Beschreibung

Die Erfindung betrifft ein Verfahren zum Schweißen von beschichteten Blechen mittels eines Laser-Hybrid-Schweißprozesses gemäß dem Oberbegriff des Anspruchs 1.

Weiters betrifft die Erfindung einen Laser-Hybrid-Schweißbrenner zum Schweißen von beschichteten Blechen bzw. Bauteilen gemäß dem Oberbegriff des Anspruchs 8.

Es sind bereits Verfahren zum Verschweißen von beschichteten Blechen, welche beispielsweise in der Automobilindustrie verwendet werden, bekannt.

Beispielsweise beschreibt die DE 101 51 257 A1 ein Verfahren zum Verbinden von gespannten und positionierten losen Karosserieteilen einer Fahrzeugkarosserie in einer Framingstation, bei welchem die Karosserieteile durch Hybridschweißen mit mindestens einem Laserstrahl und mit mindestens einem Lichtbogen geschweißt werden.

Die JP 2002/160082 A, die als nachstliegenden Stand der Technik angesehen wird, betrifft ein Verfahren und eine Vorrichtung zum Schweißen von beschichteten Blechen.

Die Verwendung eines Drahtes als Zusatzwerkstoff für einen Schutzgasschweißprozess zum Schweißen von beschichteten Blechen wird beispielsweise in dem Dokument "Fülldrahtelektrode ohne Schlacke für verzinkte Bleche" (siehe http://www.oerlicon.de) beschrieben. Ein Problem beim Schweißen von Blechen besteht häufig darin, dass aufgrund der hohen Wärmeeinbringung die Bleche verzogen werden.

Kombinierte Laser-Lichtbogenschweißgeräte, so genannte Laser-Hybrid-Schweißeinheiten kombinieren die Vorteile des Lasers, wie Schnelligkeit und gute Wärmeeinbringung in das Werkstück mit den vorteilen herkömmlicher Schweißverfahren, z.B. dem MIG-(Metall-Inert-Gas)Schweißverfahren, wie beispielsweise eine gute Spalt-überbrückbarkeit. Beispielsweise beschreiben die US 2001/050273 A1, die US 2001/052511 A1, die US 2001/047984 A1, die US 2003/173343 A1 sowie die US 2002/008094 A1 Laser-Hybrid-Schweißverfahren, bei welchen zumindest ein Laserprozess und ein Schutzgasschweißprozess durchgeführt wird. Zwar wird darauf eingegangen, dass auch beschichtete Werkstücke miteinander verschweißt werden können, nicht jedoch die Probleme, welche durch das Verdampfen der Beschichtung auftreten erörtert bzw. eine Lösung zur Behebung dieses Problems vorgeschlagen.

Auch die WO 97/37808 A1 beschreibt ein kombiniertes Laser-Lichtbogen-Schweißgerät, ohne dass speziell auf das oben genannte Problem des Verschweißens von beschichteten Blechen eingegangen wird.

Grundsätzlich ist zu dem aus dem Stand der Technik bekannten Verfahren zu erwähnen, dass in der Praxis hierzu eine Nahtvörbereitung notwendig ist, bei der ein Gasverdampfungsspalt bzw. Ausgasungsraum zwischen den Blechen geschaffen werden muss, damit die bei der Schweißung entstehenden Gase austreten können. Weiters wird in der Praxis meist eine Nachbearbeitung der Schweißnaht durchgeführt, um eine dichte Schweißnaht zu erreichen, d.h., dass nach dem automatisierten Schweißprozess von Hand eine Nachschweißung durchgeführt wird, um die entstandenen Einschlüsse, Krater oder Löcher zu schließen.

Die Aufgabe der vorliegenden Erfindung besteht daher in der Schaffung eines Verfahrens zum Verschweißen beschichteter Bleche, bei welchem möglichst wenige bis gar keine Einschlüsse, beispielsweise durch Verdampfung der Beschichtung entstehen. Eine Aufgabe der Erfindung liegt auch darin, dass die Schweißnaht eine notwendige Stabilität und Dichtheit aufweist. Eine weitere Aufgabe der Erfindung liegt darin, die Vorbereitungszeit bzw. die vorbearbeitung an den zu verschweißenden Blechen zu minimieren bzw. sogar zu eliminieren, so dass keine Schweißnahtvorarbeiten notwendig sind. Eine weitere Aufgabe der Erfindung liegt in der Schaffung eines Schweißprozesses, bei welchem im Wesentlichen weniger Energie bzw. Wärme in das Werkstück, insbesondere die Bleche eingebracht wird.

Die Erfindung ist mit einem Verfahren gemäß Anspruch 1 definiert.

Der Vorteil liegt darin, dass aufgrund des Einsatzes eines bestimmten Zusatzwerkstoffes in Kombination mit einem Laser-Hybrid-Schweißprozess eine Schweißnaht ohne Einschlüsse ermöglicht wird, wodurch einerseits eine Dichtheit der Schweißnaht und andererseits eine hohe Stabilität der Schweißnaht erreicht wird. Ein weiterer Vorteil ergibt sich daraus, dass der Schweißprozess in einem Arbeitsvorgang erfolgt und somit eine Nachbearbeitung der Schweißnaht nicht mehr erforderlich ist. Es muss somit kein zusätzlicher Schweißprozess, beispielsweise per Hand, nach der Schweißung mehr erfolgen, um eine entsprechende Stabilität und Dichtheit zu gewährleisten, wie dies beim Stand der Technik der Fall ist. Damit wird eine wesentliche Zeitersparnis erreicht und können dementsprechend auch die Kosten gesenkt werden. Von Vorteil ist aber auch, dass die zu verschweißenden Bleche nicht vorbearbeitet werden müssen, da vorab kein sogenannter Verdampfungsspalt geschaffen werden muss und die Bleche lediglich unbearbeitet übereinander gehalten werden, wodurch wieder in einfacher Art und Weise eine Zeit- und Kostenersparnis erreicht wird. Damit wird es auch möglich, ein vollautomatisiertes Verschweißen von Blechen bzw. Bauteilen durchzuführen, wie dies beispielsweise in der Autoindustrie gewünscht ist. Durch die Verwendung des MIG/MAG-Schweißprozesses als Schutzgasschweißprozess kann ein billiger und aus dem Stand der Technik bekannter Schweißbrenner in Kombination mit der Lasereinheit bzw. mit dem Laser eingesetzt werden. Durch die Verwendung eines MIG/MAG-Schweißprozesses wird ein sehr guter Schweißprozess zum Einbringen bzw. Zuführen von Zusatzwerkstoffen bzw. von Schweißdrähten eingesetzt, so dass sehr gute Schweißergebnisse erzielt werden können. Aufgrund der, durch den Kalt-Metall-Transfer-Schweißprozess geringeren Wärmeeinbringung kann der Verzug der Bleche wesentlich minimiert werden.

Eine Maßnahme, bei welcher die Bleche eine Zinkbeschichtung aufweisen, und ein Schweißdraht verwendet wird, welcher bevorzugt die Bestandteile Zink, Kohlenstoff und Aluminium aufweist, oder ein Fülldraht mit der Bezeichnung SAF DUAL ZN® verwendet wird, ist von Vorteil, da dadurch der Schweißdraht mit dem Blech, insbesondere mit der Beschichtung des Bleches harmonisiert und somit die auftretenden Dämpfe der Beschichtung einschlussfrei mit in die Schweißnaht einbindet, so dass eine dichte Schweißnaht ohne Nachbearbeitung in einem Arbeitsschritt geschaffen werden kann.

Die Bleche werden vorteilhafterweise übereinander positioniert und über eine Spannvorrichtung gegeneinander gedrückt, wodurch erreicht wird, dass die Bleche vor der Schweißung in der Spannvorrichtung exakt und fest positioniert werden, so dass der Schweißprozess nach der Positionierung und Einspannung der Bleche problemlos durchgeführt werden kann, ohne dass beispielsweise eines der Bleche verrutscht und somit das Schweißergebnis beeinträchtigt wird.

Aus einer Maßnahme, bei welcher die Energie des Laserprozesses der Blechdicke, bzw. den Erfordernissen der Schweißung angepasst wird, ergibt sich der Vorteil, dass der Laserprozess nur die für das Schweißverfahren benötigte Energie verwendet und somit keine unnötige Energie verloren geht.

Von Vorteil ist eine Maßnahme bei dem der Laserprozess derart eingestellt wird, dass der Brennpunkt des Lasers an der Oberfläche des vom Laser aus gesehenen ersten Bleches liegt. Dadurch wird erreicht, dass der Laser bzw. die Energie bzw. die Intensität des Lasers an der Oberfläche des Bleches gebündelt wird und somit an jener Stelle der Schweißung, an welcher die größte Energie zum Aufschmelzen des Bleches benötigt wird, auch eingesetzt wird.

Eine Maßnahme, bei welcher der Schutzgasschweißprozess gleichzeitig mit oder nach dem Laserprozess aktiviert bzw. deaktiviert wird, ist von vorteil, da dadurch in einfacher Art und Weise der Start des Schutzgasschweißprozesses zum Laserprozess geregelt wird und der Schutzgasschweißprozess nicht ungewollt und/oder unkontrolliert vor oder nach dem Laserprozess gestartet wird. Somit ist in einfacher Art und Weise weiters eine gewisse Sicherheit gewährleistet und das Verletzungsrisiko und auch das Zerstörungsrisiko durch unbeabsichtigtes Zünden des Lasers und/oder des Schutzgasschweißprozesses verhindert.

Die Erfindung ist weiter mit einen Vorrichtung gemäß Anspruch 8 definiert.

Gemäß einem Merkmal der Erfindung sind die Bleche mit einer Zinkbeschichtung ausgebildet.

Eine weitere Maßnahme, bei welcher die Bleche übereinander positioniert werden und mittels einer am Schweißkopf angeordneten Spannvorrichtung gegeneinander gedrückt werden und die Spannvorrichtung aus einer Rolle und einem Spannbügel gebildet wird, die am Laser-Hybrid Schweißbrenner angeordnet wird, ist von Vorteil, da dadurch in vorteilhafter Weise eine externe Spannvorrichtung nicht mehr erforderlich ist. Ein weiterer Vorteil liegt darin, dass die Bleche aufgrund der am Laser-Hybrid Schweißkopf angeordneten Spannvorrichtung lediglich im unmittelbaren Bereich der Schweißung gegeneinander gedrückt werden, so dass speziell im Schweißbereich kein bzw. nahezu kein Spalt zwischen den Blechen vorhanden ist.

Vorteilhafterweise wird die Lasereinheit aus einem aus dem Stand der Technik bekannten Eximerlaser (z.B. ArF, KrF, XeCl), Festkörperlaser (z.B. Rubin, Nd:YAG, Nd-Glas), Halbleiterlaser (GaAs, GaAlAs) oder Gaslaser (CO₂) gebildet, da dadurch ein einfacher und kostengünstiger Laser-Hybrid Schweißkopf geschaffen werden kann.

Die vorliegende Erfindung wird anhand der beigefügten Zeichnungen näher erläutert.

Darin zeigen:
Fig. 1 eine schematische Darstellung eines Laser-Hybrid-Schweißkopfes;
Fig. 2 Strom-, Spannungs- und Bewegungsdiagramme eines Kalt-Metall-Transfer-Schweißprozesse gemäß der Erfindung und ein Strom-Zeitdiagramm eines Laserprozesses, sowie eine Draufsicht auf die verschweißten Bleche in vereinfachter Darstellung;
Fig. 3 Strom-, Spannungs- und Bewegungsdiagramme eines Puls-schweißprozesses und ein Strom-Zeitdiagramm eines Laserprozesses, sowie eine Draufsicht auf die verschweißten Bleche, vereinfacht und schematisch dargestellt, nicht im Gegenstand der Erfindung;
Fig. 4 eine Kehlnaht in geschnittener und vereinfachter schematischer Darstellung;
Fig. 5 eine mittels Laser geschweißte I-Naht in geschnittener und vereinfachter schematischer Darstellung;
Fig. 6 eine im Laser-Hybrid Schweißverfahren geschweißte I-Naht in geschnittener und vereinfachter schematischer Darstellung;
Fig. 7 die Startphase und
Fig. 8 den Start für den Laser-Hybrid-Schweißprozess in schematischer und vereinfachter Darstellung.

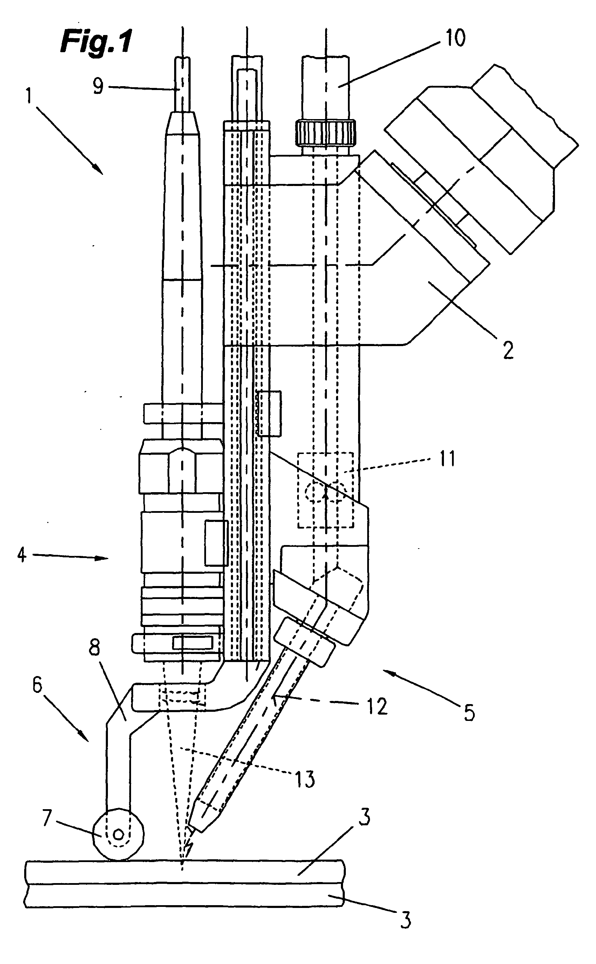

In Fig. 1 ist ein erfindungsgemäßer Laser-Hybrid-Schweißkopf 1 bzw. Laser-Hybrid-Schweißbrenner, welcher beispielsweise an einem Roboterarm 2 angeordnet ist, zum Verschweißen von beschichteten Blechen 3, wie diese in der Autoindustrie verwendet werden, vereinfacht und schematisch dargestellt. Dabei weisen die Bleche 3 bevorzugt eine Zinkbeschichtung auf. Der Laser-Hybrid-Schweißkopf 1 ist aus zumindest einer Lasereinheit 4 und zumindest einer Schutzgaseinheit 5 gebildet.

Die Bleche 3 werden unbearbeitet, bzw. unvorbereitet zueinander gehalten. Das bedeutet, dass zum Verschweißen der Bleche 3 keine spezielle Vorbereitung bzw. Bearbeitung für die Schweißnaht benötigt bzw. getroffen werden müssen, um beispielsweise austretende Zinkdämpfe abzuführen, wie dies aus dem Stand der Technik bekannt ist. Die Bleche 3 werden einfach übereinander angeordnet, ohne beispielsweise einen Vergasungsspalt für das Zink zwischen den Blechen 3 zu bilden, wie dies aus dem Stand der Technik bekannt ist. Somit wird in einfacher Art und Weise schon bei der Vorbereitung der Bleche 3 zum Verschweißen eine wesentliche Zeit- und Kostenersparnis erreicht.

Die Bleche 3 werden also übereinander und in der für die Schweißung richtigen Position angeordnet und danach beispielsweise mit Hilfe von Spannvorrichtungen 6 auf dieser Position gehalten. Im dargestellten Ausführungsbeispiel ist die Spannvorrichtung 6 aus einer Rolle 7 gebildet, welche am Laser-Hybrid-Schweißkopf 1 angeordnet ist und im Nahbereich der Laser-Hybrid-Schweißung mittels einem Spannbügel 8 auf die Bleche 3 drückt. Der Laser-Hybrid-Schweißkopf 1 wird also nach der richtigen Positionierung in Richtung der Bleche 3 bis zur Kontaktierung der Spannvorrichtung 6, also der Rolle 7 bewegt. Durch die Rolle 7 werden die Bleche 3 im Bereich der Schweißung gegeneinander gedrückt, sodass ein annähernd spaltfreies Positionieren der Bleche 3 zueinander, also ein Spalt von Null bzw. nahezu Null mm zwischen den Blechen 3, erreicht wird. Dadurch werden die Bleche 3 nur in jenem Bereich, in welchem tatsächlich geschweißt wird, zueinander gehalten, wodurch natürlich der Aufwand der Vorbereitungen der Bleche 3 zum Schweißen wesentlich minimiert wird.

Für die Lasereinheit 4 des Laser-Hybrid-Schweißkopfs 1 kann jeder aus dem Stand der Technik bekannte Laser verwendet werden, wie beispielsweise Eximerlaser (z.B. ArF, KrF, XeCl), Festkörperlaser (z.B. Rubin, ND:YAG, Nd-Glas), Halbleiterlaser (GaAs, GaAlAs) und Gaslaser (CO₂). Die Schutzgaseinheit 5 wird aus einem MIG/MAG-Schweißbrenner für einen MIG/MAG-Schweißprozess gebildet. Natürlich ist auch beispielsweise ein sogenannter Kalt-Metall-Transfer-Schweißprozess in Kombination mit dem Laserprozess einsetzbar, wie er in einer der nachfolgenden Figuren noch genauer beschrieben wird.

Der Laser-Hybrid-Schweißkopf 1 wird dabei bevorzugt auf einem Roboterarm 2 eines Schweißroboters angeordnet, wie er in der Autoindustrie eingesetzt wird, wo die zu verschweißenden Bleche 3 bzw. Bauteile in den seltensten Fällen zweidimensional ausgebildet sind. Mit herkömmlichen Schweißverfahren für zinkbeschichtete Bleche 3 konnte die Schweißung durch den Schweißroboter nicht den Ansprüchen des Benutzers entsprechend durchgeführt werden und es war nach der Laserschweißung des Schweißroboters eine weitere manuelle Schweißung notwendig, um die nötige Stabilität und/oder Dichtheit der Schweißnaht zu gewährleisten. Ein wesentlicher Vorteil besteht daher darin, dass mit dem erfindungsgemäßen Verfahren nunmehr die Schweißung in einem Arbeitsschritt durchgeführt werden kann, wobei eine hohe Festigkeit und eine Dichtheit der Schweißnaht erzielt wird.

Der Laser-Hybrid-Schweißkopf 1, bzw. die Lasereinheit 4 und die Schutzgaseinheit 5 sind beispielsweise über zwei unabhängige Schlauchpakete 9, 10, welche jeweils zumindest eine Einheit des Laser-Hybrid-Schweißkopfes 1 mit den für den jeweiligen Schweißprozess notwendigen Mitteln, beispielsweise Strom und Spannung, Kühlflüssigkeit, Schweißdrahtzufuhr, usw. versorgen, mit einem Schweißgerät und/oder einer Stromquelle und/oder einem Drahtvorrat verbunden, wobei diese in der gezeigten Ausführung nicht dargestellt sind. Die Schutzgaseinheit 5 weist weiters eine Drahtfördervorrichtung 11 auf, mit welcher ein Schweißdraht 12 in Richtung der Bleche 3 gefördert wird. Bevorzugt weist der Zusatzwerkstoff bzw. der Schweißdraht 12 die Bestandteile Zink und Kohlenstoff und Aluminium auf. Vorteilhafterweise wird als Schweißdraht 12 ein Fülldraht mit der Bezeichnung SAF DUAL ZN^{®}verwendet. Natürlich ist es auch möglich, einen Schweißdraht 12 mit ähnlichen Zusatzwerkstoffen anzuwenden.

Wesentlich bei dem erfindungsgemäßen Verfahren und bei der erfindungsgemäßen Vorrichtung ist der Einsatz eines speziellen Schweißdrahtes 12 beim Verschweißen von verzinkten Blechen 3, wodurch während des Schweißprozesses das von den Blechen 3 verdampfende Zink keine Auswirkungen auf die Schweißnaht 12 hat. Dies wird bevorzugt durch den Einsatz eines Schweißdrahtes 12 mit der Bezeichnung SAF DUAL ZN^{®} erreicht. Hierzu ist noch wesentlich, dass die Energieeinbringung über den Schutzgasschweißprozess möglichst niedrig gehalten werden soll, um einen möglichst geringen Verzug und gute mechanisch technologische Eigenschaften zu erreichen.

Während des Schweißprozesses werden die Bleche 3 vom Laser 13 aufgeschmolzen bzw. durchgeschweißt und dabei die Zinkbeschichtung der Bleche 3 gelöst bzw. verdampft. Mit dem darauf folgenden Schutzgasschweißprozess wird durch Einbringung von Zusatzmaterial die Laserschweißung bzw. die Laserspur aufgefüllt bzw. verschlossen und die Bleche 3 dicht miteinander verschweißt.

Nachfolgend sind Parameter und/oder Einstellungen zur Veranschaulichung und Anwendung des Verfahrens beschrieben. Dabei zeigen diese nur eine Variante für eine bestimmte Anwendung, welche für andere Anwendungen, insbesondere andere Bleche, abgeändert werden können.

Beispielsweise erhält man sehr gute Schweißergebnisse, bei Zwei-Blechverbindungen, insbesondere mit einer Kehlnaht am Überlappstoß oder einer Stumpfnaht oder einer Stichnaht am Überlappstoß, wobei die Blechverbindungen zwischen 0,5 und 2 mm an elektrolytisch verzinkten und an feuerverzinkten Blechen erfolgt. Es wird ein Brennpunktdurchmesser von 0,4 bis 1,4 mm gewählt, wobei der Abstand zwischen Brennpunkt und Auftreffen des Zusatzwerkstoffes(Schweißprozessabstand) 0 bis 5 mm betragen kann. Die Leistung des Lasers P_{L} beträgt zwischen 3 und 4 kW. Die Einstellungen an der Stromquelle der Schutzgaseinheit können derart erfolgen:
V_{D} (Schweißdrahtfördergeschwindigkeit) = 1 bis 10 m/min;
d_{D}=(Schweißdraht-Durchmesser) = 1,0 bis 1,2 mm;
I (Schweißstrom) = zwischen 40 und 260 A.

Dabei können sowohl Zwei-Komponentengase, als auch Drei-Komponentengase für diese Anwendungen verwendet werden. Ein Zwei-Komponentengas kann beispielsweise aus 96% Ar 4% O₂ oder ein Drei-Komponentengas wie z.B. DIN EN 439 - M14 (82 Vol. % Ar + 14 Vol. % CO₂ + 4 Vol. % O₂) mit Abweichungen von ± 3 % zusammengesetzt sein.

Für die in der Autoindustrie meist verwendetsten Bleche 3 kann beispielsweise eine Einstellung des Schweißprozesses derart erfolgen, wie in den beiden Beispielen 1 und 2 erläutert (darin bedeuten vₛ die Schweißgeschwindigkeit, V_{D} die Drahtfördergeschwindigkeit, I den Schweißstrom, U die Schweißspannung und P_{L} die Laserleistung):

### Beispiel 1:

elektrolytischer Zinküberzug ZE75/75 nach EN 10152
Stichnaht am Überlappstoss:
Schweißdraht: SAF DUAL ZN^{®}
Vₛ: 3 m/min
I:50A
V_{D}: 1, 6m/min
U:12,2 V
Abstand: 2 mm
P_{L}: 3,9 kW
Brennpunktdurchmesser: 0,8 mm

### Beispiel 2:

Z 100 feuerverzinkter Zinküberzug: Zinkschichtdicke: 7,5 µm Stumpfnaht
Schweißdraht: SAF DUAL µZN^{®}
V_{S}: 2,4m/min
I:50A
V_{D} 1,6m/min
U:12,2 V
Abstand: 2 mm
P_{L}: 3,9 9 kW
Brennpunktdurchmesser: 0,8 mm

Damit werden sehr gute und vor allem dichte Schweißnähte erzielt, die in einem Arbeitsschritt, also in einem Schweißprozess, über den Laser-Hybrid-Schweißprozess hergestellt werden können, ohne dass eine Nachbearbeitung der Schweißnaht erforderlich ist. Selbstverständlich können auch bei Änderung eines oder mehrerer Parameter die selben Schweißergebnisse erzielt werden. Beispielsweise wird durch Abänderung zusammenwirkender Parameter, wie beispielsweise Schweißdrahtfördergeschwindigkeit (v_{D}), Schweißstromamplitude (I), usw., wiederum die gleich gute Schweißqualität erzielt, so dass die Einstellungen nur als Anhaltspunkte gesehen werden können. Auch ist es möglich, entsprechende Routinen in einem Speicher des Schweißgerätes zu hinterlegen, über welche eine automatische Einstellung der Anlage erfolgen kann. Beispielsweise können bei Abänderung eines Parameters von der Anlage die restlichen Parameter automatisch ermittelt und eingestellt werden, um wiederum die bestmöglichen Schweißergebnisse zu erreichen.

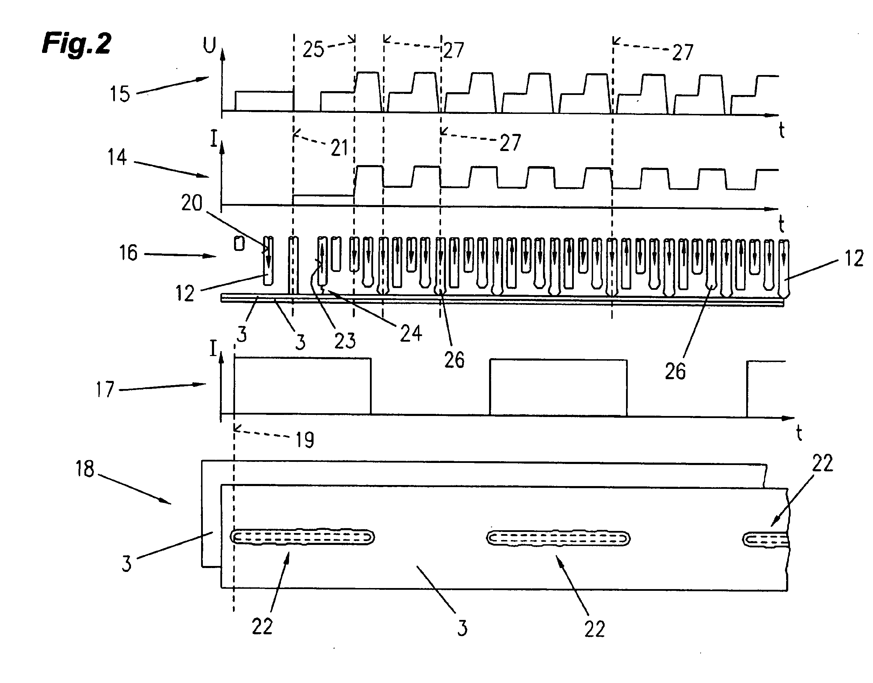

In Fig. 2 ist nun anhand eines Strom-Zeitdiagramms 14, eines Spannungs-Zeitdiagramms 15 und eines Bewegungs-Zeitdiagramms 16 der zeitliche Ablauf des Kalt-Metall-Transfer-Schweißprozesses, vereinfacht und schematisch dargestellt. Weiters ist in einem eigenen Strom-Zeitdiagramm 17 der kombinierte Laserprozess dargestellt, sowie zur Erläuterung eine Draufsicht 18 auf die zu verschweißenden bzw. geschweißten Bleche 3. Die Diagramme des Schutzgasschweißprozesses sind dabei im Verhältnis zum Strom-Zeitdiagramm 17 des Lasers 13, bzw. zur Draufsicht 18 der Bleche 3 nicht maßstabsgetreu dargestellt. Die Diagramme dienen lediglich zur Veranschaulichung des Ablaufs, bzw. der zeitlichen Abfolge der Schutzgasschweißung für einen Teil einer Schweißnaht 22, wogegen beim Laserprozess eine Abbildung des zeitlichen Verlaufs zur Bildung der Schweißnähte 22 auf den Blechen 3 dargestellt ist.

Beim Beginn des Laser-Hybrid Schweißprozesses wird zum Zeitpunkt 19 der Laser 13 von der Lasereinheit 4 aktiviert, wodurch die Bleche 3 aufgeschmolzen, bzw. durchgeschweißt und dabei die Zinkbeschichtung der Bleche 3 verdampft werden. Im Nahbereich des Lasers 13, also in Schweißrichtung gesehen unmittelbar nach dem Laser 13, ist die Schutzgaseinheit 5 angeordnet. Nach dem Zünden des Lasers 13 oder gleichzeitig mit dem Aktivieren des Lasers 13 wird die Startphase für die Zündung des Lichtbogens beim Schutzgasschweißprozess durchgeführt, indem der Schweißdraht 12 zu einem Zeitpunkt 21 in Richtung des Werkstückes, also der Bleche 3, entsprechend Pfeil 20 bis zur Kontaktierung mit diesen bewegt wird. Bei der Kontaktierung des Schweißdrahtes 12 mit den Blechen 3 entsteht ein Kurzschluss. Danach wird eine Erhöhung des Stromes I derart durchgeführt, dass ein Aufschmelzen des Schweißdrahtes 12 verhindert wird. Durch den darauf folgenden Rückzug des Schweißdrahtes 12 in Richtung des Pfeiles 23 wird ein Lichtbogen 24 gezündet. Eine derartige Zünd- bzw. Startphase für den Lichtbogen 24 ist auch unter dem Begriff Lift-Arc-Zündung bekannt.

Zum Zeitpunkt 25 ist die Zünd- bzw. Startphase für den Lichtbogen 24 des Schutzgasschweißprozesses abgeschlossen und es erfolgt nun eine Erhöhung des Stromes I und zeitgleich eine Vorwärtsbewegung des Schweißdrahtes 12 in Richtung der Bleche 3. Durch die Stromerhöhung bildet sich nunmehr am Ende des Schweißdrahtes 12 ein Tropfen 26 aus, welcher zum Zeitpunkt 27 bei einer neuerlichen Kontaktierung des Schweißdrahtes 12 mit den Blechen 3 bzw. mit dem Schmelzbad, welches durch den Lichtbogen 24 gebildet wird, und der anschließenden Rückwärtsbewegung des Schweißdrahtes 12 abgelöst wird. Während des Schutzgasschweißprozesses führt der Schweißdraht 12 eine ständige Vor-Rückwärtsbewegung durch. Da die Ablösung des Schweißtropfens 26 ohne Stromerhöhung stattfindet, wird mit diesem Prozess wenig Energie, insbesondere Wärmeenergie, in die Bleche 3 eingebracht.

Wie bereits erwähnt, werden die Bleche 3 vom Laser 13 aufgeschmolzen, bzw. durchgeschweißt und weiters die Zinkbeschichtung der Bleche 3 gelöst bzw. verdampft. Mit dem darauf folgenden Schutzgasschweißprozess wird durch Einbringung von Zusatzmaterial die Laserschweißung bzw. die Laserspur aufgefüllt bzw. verschlossen. Dabei wird der Zusatzwerkstoff mit möglichst geringer Energieeinbringung zugeführt, da der Tropfenübergang im Kurzschluss ohne Stromerhöhung erfolgt, so dass die Bleche 3 wiederum dicht miteinander verschweißt sind. Durch diese spezielle Zusatzwerkstoffeinbringung über den Kalt-Metall-Transfer-Prozess wird erreicht, dass die Schweißraupe in ihrer Breite sehr schmal gehalten werden kann, da über den Schutzgasschweißprozess nur eine geringfügige zusätzliche Aufschmelzung der Bleche 3 verursacht wird.

Bei einem verzögerten Start des Schutzgasschweißprozesses kann im Schweißgerät bzw. in der Steuervorrichtung des Schweißgerätes ein Parameter eingestellt werden. Von der Steuervorrichtung wird aus dem eingegebenen Abstand zwischen der Lasereinheit 4 und der Schutzgaseinheit 5 und der definierten Schweißgeschwindigkeit die zeitliche Verzögerung berechnet und somit der Schutzgasschweißprozess automatisch zum Laser 13 aktiviert bzw. deaktiviert.

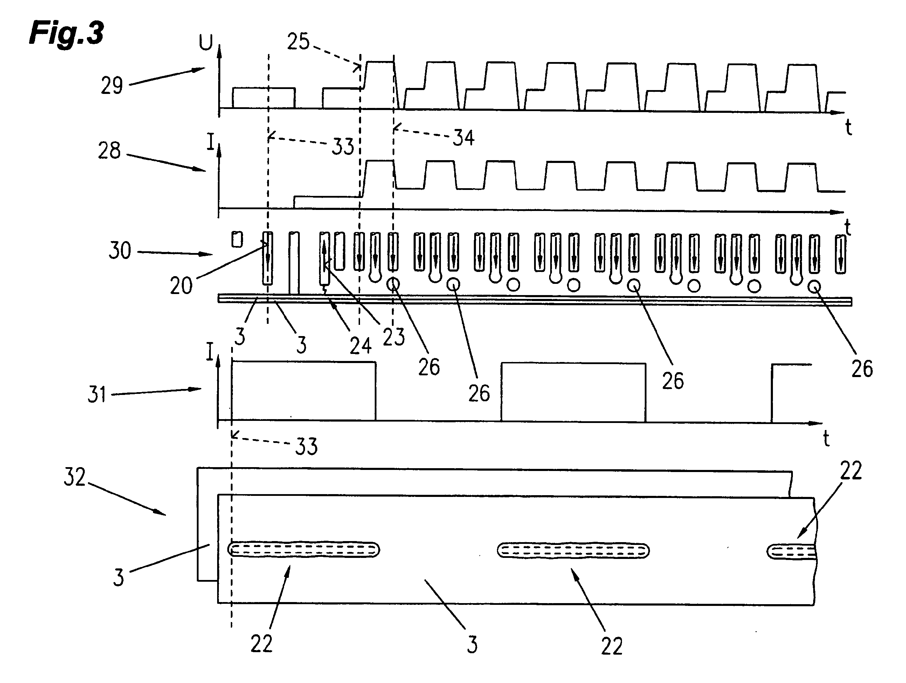

Fig. 3 zeigt ein Beispiel, das nicht im Gegenstand der Erfindung steht, eines Laser-Hybrid-Prozesses mit einem Laser 13 und einem Puls-Schweißprozesses, wobei nunmehr anhand eines Strom-Zeitdiagramms 28, eines Spannungs-Zeitdiagramms 29 und eines Bewegungs-Zeitdiagramms 30 der zeitliche Ablauf des Schutzgasschweißprozesses, insbesondere eines Puls-Schweißprozesses, vereinfacht und schematisch dargestellt ist. Weiters ist in einem Strom-Zeitdiagramm 31 der Laserprozess dargestellt, sowie zur Erläuterung eine Draufsicht 32 auf die zu verschweißenden bzw. geschweißten Bleche 3. Hierbei sind die Diagramme des Schutzgasschweißprozesses dabei wiederum nicht maßstabsgetreu zum Strom-Zeitdiagramm 31 des Lasers 13, bzw. zu der Draufsicht 32 der Bleche 3, dargestellt und zeigen lediglich den Ablauf, bzw. die zeitliche Abfolge der Schutzgasschweißung für einen Teil einer Schweißnaht 22, wogegen beim Laserprozess eine Abbildung des zeitlichen Verlaufes zur Bildung der Schweißnähte 22 auf den Blechen 3 dargestellt ist.

Zum Zeitpunkt 33 wird der Laser 13 aktiviert und werden durch diesen die Bleche 3 aufgeschmolzen bzw. durchgeschweißt und die Zinkbeschichtung der Bleche 3 verdampft. Nach dem Zünden des Lasers 13 oder gleichzeitig mit dem Start des Lasers 13 wird die Zünd- bzw. Startphase des Schutzgasschweißprozesses durchgeführt, wobei der Schweißdraht 12 zu einem Zeitpunkt 34 in Richtung des Werkstückes, also der Bleche 3, in Richtung des Pfeiles 20 bis zur Kontaktierung mit diesen bewegt wird. Bei der Kontaktierung des Schweißdrahtes 12 mit den Blechen 3 entsteht ein Kurzschluss, wobei eine Erhöhung des Stromes I derart durchgeführt wird, dass ein Aufschmelzen des Schweißdrahtes 12 unterbunden wird. Durch den darauf folgenden Rückzug des Schweißdrahtes 12 in Richtung des Pfeiles 23 wird der Lichtbogen 24 gezündet, wobei der Schweißdraht 12 in eine definierte Ausgangsposition verfahren wird. Die Zünd- bzw. Startphase für den Schutzgasschweißprozess ist somit abgeschlossen. Wie bereits zuvor erwähnt, ist dieser Zünd- bzw. Startphase auch unter dem Begriff Lift-Arc-Zündung bekannt. Zum Zeitpunkt 25, also nach der Zünd- bzw. Startphase, erfolgt nun eine Erhöhung des Stromes I und zeitgleich eine kontinuierliche Vorwärtsbewegung des Schweißdrahtes 12 in Richtung der Bleche 3. Am Ende des Schweißdrahtes 12 bildet sich ein Tropfen 26, welcher sich zum Zeitpunkt 34 vom Schweißdraht 12 ablöst, wobei die Ablöse beispielsweise durch einen Stromimpuls eingeleitet werden kann. Durch Absenkung des Stromes I und erneutes Erhöhen wird wiederholt ein Tropfen 26 gebildet und in zeitlicher Abfolge vom Schweißdraht 12 abgelöst.

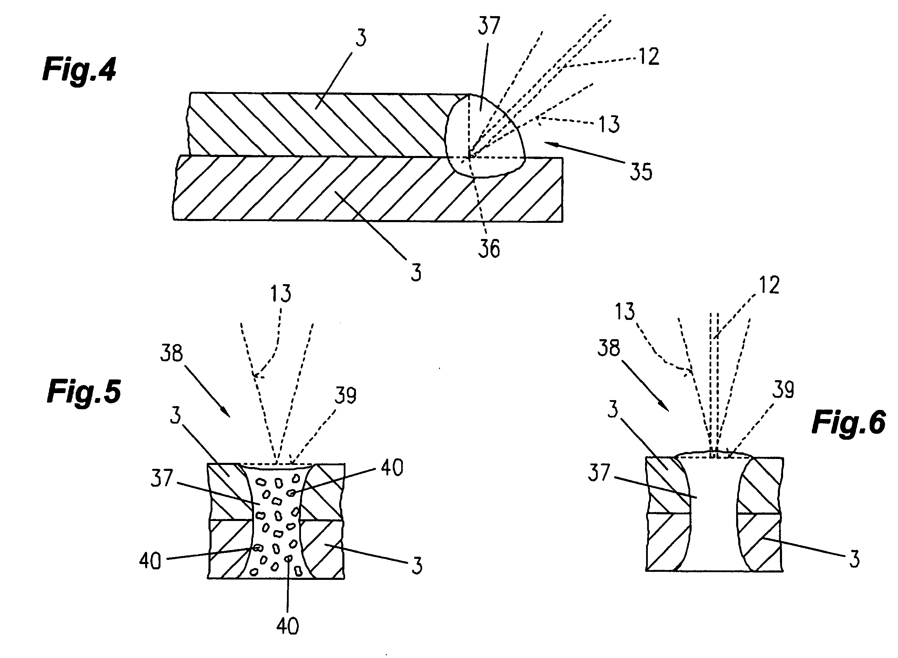

Die Fig. 4 bis 6 zeigen nunmehr in vereinfachter und schematischer Darstellung unterschiedliche Schweißnahtformen in geschnittener Seitenansicht, wobei in Fig. 5 eine mit einem herkömmlichen Schweißverfahren hergestellte Schweißnaht dargestellt ist. Natürlich sind sämtliche in der Schweißtechnik bekannte Nahtformen mit dem erfindungsgemäßen Schweißverfahren möglich, allerdings werden in der Beschreibung lediglich zwei verschiedene Nahtformen erläutert, da die übrigen Nahtformen aus dieser Beschreibung ableitbar sind.

In Fig. 4 ist ein Schnitt einer Kehlnaht 35 vereinfacht dargestellt. Die Bleche 3 sind überlappend und spaltfrei bzw. annähernd spaltfrei, angeordnet. Der Laser 13 wird auf einen Schnittpunkt 36 der Bleche 3 gerichtet. Die Laserenergie bzw. Intensität und die Schutzgasschweißparameter richten sich dabei nach den zu verschweißenden Blechen 3, und können beispielsweise vom Benutzer an einer Laser-Stromquelle und am Schweißgerät bzw. der Steuervorrichtung des Schweißgerätes eingestellt werden. Dabei wird mittels des Lasers 13 ein Einbrand in die Bleche 3 durchgeführt, worauf der auf den Laserprozess 13 folgende Schutzgasschweißprozess mittels des Zusatzwerkstoffes, also des Schweißdrahtes 12, eine Schweißnaht 37 in Form der Kehlnaht 35 über die Bleche 3 zieht und somit den Laser-Einbrand vollständig verschließt. Der Übersicht halber sind der Laser 13 und der Schweißdraht 12 strichliert dargestellt. Der Vorteil besteht darin, dass der eingesetzte Schweißdraht 12 einen Zinkgehalt aufweist, durch welchen die Zinkbeschichtung der Bleche 3 gebunden wird und sich dadurch kein Zink "aufstauen" kann. Bei den aus dem Stand der Technik bekannten Schweißverfahren für verzinkte Bleche 3 wird das Zink vor dem Laser 13 und/oder dem Schutzgasschweißverfahren "hergeschoben", wobei diese Zinkpolster dann sprichwörtlich explodieren können. Dadurch können Einschlüsse bzw. Löcher oder Krater in der Schweißnaht 37 entstehen, die nachträglich mit einer separaten Schweißung nachbearbeitet werden müssen, um eine dichte Schweißnaht zu schaffen. Beim erfindungsgemäßen Verfahren wird dagegen durch die Bindung des Zinks eine stabile, bzw. stabilere und dichte Schweißnaht 37 geschaffen. Es entstehen also keine Einschlüsse, Löcher bzw. Krater in der Schweißnaht 37 und es wird somit eine dichte Schweißnaht in einem Arbeitsgang geschaffen.

Fig. 5 zeigt ein Ausführungsbeispiel aus dem Stand der Technik, bei dem ein Schnitt einer I-Naht 38, welche nur mit einem Laser-Schweißprozess geschweißt wird, vereinfacht dargestellt. Dabei ist der Laser 13 bzw. der Brennpunkt des Lasers 3 bevorzugt auf eine Oberkante 39 bzw. Oberfläche des oben aufliegenden Bleches 3 gerichtet. In dem dargestellten Ausführungsbeispiel wird lediglich der Laser 13 eingesetzt, wie dies üblicherweise der Fall ist. Aufgrund der Zinkbeschichtung der Bleche 3 bildet sich während des Schweißens mittels des Lasers 13 ein Zinkpolster vor dem Laser 13, durch welchen Einschlüsse 40, Löcher bzw. Krater in der Schweißnaht 37 entstehen. Dadurch wird die Qualität der Schweißnaht 37 jedoch wesentlich beeinflusst, insbesondere verschlechtert.

Fig. 6 zeigt nunmehr eine mit dem erfindungsgemäßen Laser-Hybrid Schweißverfahren geschweißte I-Naht 38. Der Laser 13 ist, wie eingehend beschrieben, voreilend, wobei der Brennpunkt des Lasers 13 bevorzugt an der Oberfläche 39 des ersten Bleches 3 liegt. Mittels des Lasers 13 werden die Bleche 3 aufgeschmolzen, bzw. durchgeschweißt, und der darauf folgende Schutzgasschweißprozess legt eine einschlussfreie Schweißnaht 37 darüber. Dies wird dadurch erreicht, dass die Zusatzwerkstoffe des Schweißdrahtes 12 in vorteilhafter Weise mit der Beschichtung der Bleche 3 bzw. dem Schmelzbad zusammenwirken. Dadurch wird eine im Wesentlichen verbesserte Schweißnaht 37 ermöglicht, bei welcher in einem Arbeitsgang eine stabile und dichte Schweißnaht 37 gewährleistet ist.

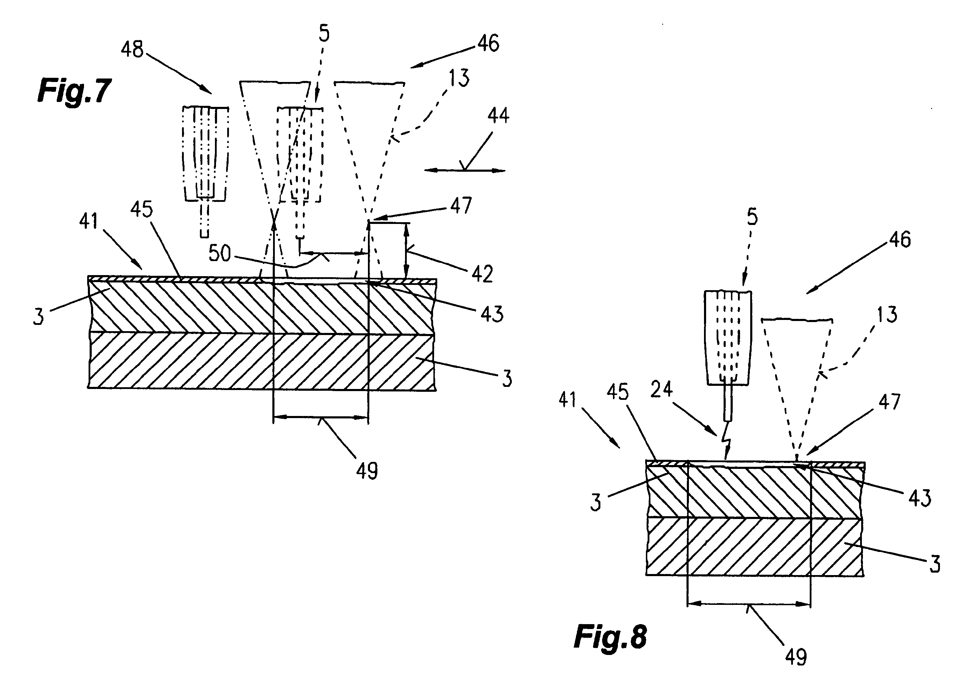

Fig. 7 und Fig. 8 zeigen nunmehr eine Startphase und den Start für den Laser-Hybrid-Schweißprozess, in schematischer und vereinfachter Darstellung. Dabei wird zumindest ein Laserprozess mit Hilfe des Lasers 13 und ein Schutzgasschweißprozess mit einer MIG/MAG-Schutzgaseinheit 5, durchgeführt. Der Laser 13 eilt dem Schutzgasschweißprozess vor, wobei der Schutzgasschweißprozess im Nahbereich des Lasers 13 positioniert ist. Über den Schutzgasschweißprozess wird ein Schweißdraht 12 an eine Schweißstelle zugeführt.

Beim Start des Laserprozesses, wenn sich der Laser-Hybrid-Schweißkopf 1 in seiner Ausgangsposition 46 befindet, wird der Brennpunkt 47 des Lasers 13 in einem definierten Abstand 42 zur Oberfläche 41 des Bleches 3 eingestellt, worauf der Laser 13 eine voreinstellbare Längsbewegung 44 in Richtung der Schutzgaseinheit 5, also bis zu einer Umkehrposition 48, und anschließend zur Ausgangsposition 46 zurück durchführt. Während der Vor-Rückbewegung des Lasers 13, also während der Längsbewegung 44, wie schematisch durch einen Doppelpfeil dargestellt, wird die Laserleistung derart geregelt, dass eine Beschichtung 45 des Bleches 3 verdampft bzw. geschmolzen wird und somit die Oberfläche 41 des obenauf liegenden Bleches 3 durch den Laser 13 von Verunreinigungen und/oder Beschichtungen befreit wird.

Vorteilhafterweise ist der Abstand 42 des Brennpunktes 47 vom Blech 3 so gewählt, dass der Laser 13 eine möglichst breite Spur am Blech 3 ausbildet, wobei diese Spur anschließend für den Schutzgasschweißprozess als Zündfläche 43 dient, wie dies nachstehend noch genauer erläutert wird. Bei einem geringen Abstand 42 bzw. bei einer Anordnung des Brennpunktes 47 an der Oberfläche 41 des Bleches 3 wird eine schmale Laserspur geschaffen, wogegen bei einem größeren Abstand 42 zur Oberfläche 41 des Bleches 3 eine breitere Laserspur bzw. Zündfläche 43 erreicht wird. Dabei ist jedoch sicherzustellen, dass der Brennpunkt 47 so gewählt wird, dass eine Aufschmelzung bzw. Verdampfung zumindest der Beschichtung 45 stattfindet.

Der Laser-Hybrid-Schweißkopf 1 führt nach Aktivierung des Lasers 13 eine voreinstellbare Längsbewegung 44 in Richtung der Schutzgaseinheit 5 und anschließend zur Ausgangsposition 46 zurück durch, wobei der Laser-Hybrid-Schweißkopf 1, insbesondere der Laser 13 und die Schutzgaseinheit 5 zur besseren Erläuterung in der Ausgangsposition strichliert und der Endposition des Reinigungsverfahrens strichpunktiert dargestellt ist. Der Laser 13 legt bei der Längsbewegung 44 eine voreingestellte bzw. einstellbare Distanz 49 zurück. Die Distanz 49 ist dabei in Abhängigkeit eines Abstandes 50 zwischen dem Laser 13 und der Schutzgaseinheit 5 gewählt, so dass bei einem anschließenden Zünden eines Lichtbogens 24, bei dem sich der Laser-Hybrid-Schweißkopf 1 in seiner Ausgangsstellung 46 befindet, dieser im Bereich des aufgeschmolzenen Bleches 3, also der Zündfläche 43, gezündet wird. Der Laser 13 bzw. der Laser-Hybrid-Schweißkopf 1 führt also zumindest eine Längsbewegung 44 bis zur Schutzgaseinheit 5 durch. Um eine sichere Zündung des Schutzgasschweißprozesses zu gewährleisten, kann die Längsbewegung 44 auch weiter als bis zur Schutzgaseinheit 5 durchgeführt werden. Dabei wird sichergestellt, dass bei einer Zündung der Lichtbogen 24 im Bereich der geschaffenen Zündfläche 43 gezündet wird.

Nach Beendigung der Startphase, wenn sich der Laser-Hybrid-Schweißkopf 1 in seiner Ausgangsposition 46 befindet, wird nunmehr der Schweißprozess gestartet. Beispielsweise werden gleichzeitig oder aufeinander folgend der Laserprozess und der Schutzgasschweißprozess eingeleitet. Dabei erfolgt die Zündung des Lichtbogens 24 auf der durch den Laser 13 vorbereiteten Zündfläche 43. Bevorzugt beträgt dabei die Distanz 50 zwischen dem Laserprozess und dem Schweißprozess zwischen 0 und 15 mm, bevorzugt zwischen 0 und 6 mm. Hierbei ist es möglich, dass gleichzeitig mit oder anschließend an den Start des Schutzgasschweißprozesses die Laserleistung auf die voreingestellte Leistung für den anschließend durchzuführenden Schweißprozess verändert wird.

Die Bewegung des Laser-Hybrid-Schweißbrenners 1 kann über einen Roboter erfolgen. Selbstverständlich kann diese Startphase auch bei einem handgeführten Laser-Hybrid-Brenner verwendet werden, wobei hierzu der Benutzer zuerst die Längsbewegung 44 mit dem Laserprozess alleine durchführt und anschließend den handgeführten Laser-Hybrid-Brenner oberhalb der geschaffenen Zündfläche 43 positioniert, so dass der tatsächliche Schweißprozess eingeleitet werden kann.

## Patentansprüche

1. Verfahren zum Schweißen von beschichteten Blechen (3), mittels eines Laser-Hybrid-Schweißprozesses, wobei zumindest ein Laserprozess und ein Schutzgasschweißprozess durchgeführt wird, wobei über den Schutzgasschweißprozess ein Zusatzwerkstoff (12) an die Schweißstelle zugeführt wird, wobei die beschichteten Bleche (3) im Wesentlichen spaltfrei zueinander positioniert werden, **dadurch gekennzeichnet, dass** als Schutzgasschweißprozess ein durch einen Kalt-Metall-Transfer-Schweißprozess gebildeter MIG/MAG-Schweißprozess verwendet wird, bei dem eine Vor-/Rückwärtsbewegung des Schweißdrahtes (12) durchgeführt wird, wobei die Energieeinbringung über den Schutzgasschweißprozess reduziert wird, da die Tropfenablöse aufgrund der Rückwärtsbewegung des Schweißdrahtes (12) erfolgt, und dass als Zusatzwerkstoff für den Schutzgasschweißprozess ein Schweißdraht (12) mit Zink- und/oder Kohlenstoff- und/oder Aluminiumgehalt eingesetzt wird.

2. Verfahren nach Anspruch 1, **dadurch gekennzeichnet, dass** der Schweißdraht (12) die Bestandteile Zink, Kohlenstoff und Aluminium aufweist.

3. Verfahren nach Anspruch 1 oder 2, **dadurch gekennzeichnet, dass** als Schweißdraht (12) ein Fülldraht mit der Bezeichnung SAF DUAL ZN verwendet wird.

4. Verfahren nach einem der Ansprüche 1 bis 3, **dadurch gekennzeichnet, dass** die Bleche (3) übereinander positioniert und über eine Spannvorrichtung (6) gegeneinander gedrückt werden.

5. Verfahren nach einem der Ansprüche 1 bis 4, **dadurch gekennzeichnet, dass** die Energie des Laserprozesses der Blechdicke, bzw. den Erfordernissen der Schweißung angepasst wird.

6. Verfahren nach einem der Ansprüche 1 bis 5, **dadurch gekennzeichnet, dass** der Laserprozess derart eingestellt wird, dass der Brennpunkt (47) des Lasers (13) an der Oberfläche (41) des vom Laser (13) aus gesehen ersten Bleches (3) liegt.

7. Verfahren nach einem der Ansprüche 1 bis 6, **dadurch gekennzeichnet, dass** der Schutzgasschweißprozess gleichzeitig mit oder nach dem Laserprozess aktiviert bzw, deaktiviert wird.

8. Laser-Hybrid-Schweißbrenner zum Schweißen von beschichteten Blechen (3) bzw. Bauteilen mit zumindest einem Laser (13) bzw. einer Laseroptik, und zumindest einer Schutzgaseinheit (5), ein Schweißdraht (12) und einer Drahtfördervorrichtung (11) für einen Schweißdraht (12), wobei eine Spannvorrichtung (6) zur im Wesentlichen spaltfreien Positionierung der beschichteten Bleche (3) bzw. Bauteile vorgesehen ist, **dadurch gekennzeichnet, dass** die Schutzgaseinheit (5) aus einem MIG/MAG-Schweißbrenner zur Durchführung eines Kalt-Metall-Transfer-Schweißprozesses gebildet ist, bei welchem Kalt-Metall-Transfer-Schweißprozess eine Vor-/Rückwärtsbewegung des Schweißdrahtes (12) durchführbar ist, und die Energieeinbringung über den Schutzgasschweißprozess reduzierbar ist, da die Tropfenablöse aufgrund der Rückwärtsbewegung des Schweißdrahtes (12) erfolgt, und dass als Schweißdraht (12) ein Material mit Zink-, und/oder Kohlenstoff-, und/oder Aluminiumgehalt ist.

9. Laser-Hybrid-Schweißbrenner nach Anspruch 8 in Kombination mit Blechen (3), **dadurch gekennzeichnet, dass** die Bleche (3) mit einer Zinkbeschichtung ausgebildet sind.

10. Laser-Hybrid-Schweißbrenner nach Anspruch 8 oder 9, **dadurch gekennzeichnet, dass** die Spannvorrichtung (6) durch eine externe Spannvorrichtung gebildet ist.

11. Laser-Hybrid-Schweißbrenner nach einem der Ansprüche 8 bis 10, **dadurch gekennzeichnet, dass** die Spannvorrichtung (6) am Schweißkopf (1) angeordnet ist.

12. Laser-Hybrid-Schweißbrenner nach einem der Ansprüche 8 bis 11, **dadurch gekennzeichnet, dass** die Spannvorrichtung (6) aus einer Rolle (7) und einem Spannbügel (8) gebildet ist.

13. Laser-Hybrid-Schweißbrenner nach einem der Ansprüche 8 bis 12, **dadurch gekennzeichnet, dass** der Laser (13) durch einen Eximerlaser (z.B. ArF, KrF, XeC1), Festkörperlaser (z.B. Rubin, Nd:YAG, Nd-Glas), Halbleiterlaser (GaAs, GaAlAs) oder Gaslaser (CO₂) gebildet ist.

## Claims

1. A method for welding coated sheet metals (3) using a laser hybrid welding process, wherein at least one laser process and one shielding gas welding process are carried out, with a filler material (12) being supplied to the welding site via the shielding gas welding process, wherein the coated sheet metals (3) are positioned relative to each other in a substantially gap-free manner, **characterized in that** a MIG/MAG welding process formed by a cold-metal-transfer welding process is employed as the shielding gas welding process including a forward/rearward movement of the welding wire (12), wherein the energy input via the shielding gas welding process is reduced because of the droplet detachment being effected by the rearward movement of the welding wire (12), and that the filler material used for the shielding gas welding process is comprised of a welding wire (12) having a zinc and/or carbon and/or aluminum content.

2. A method according to claim 1, **characterized in that** the welding wire (12) comprises the components zinc, carbon and aluminum.

3. A method according to claim 1 or 2, **characterized in that** a filler wire designated SAF DUAL ZN^{®} is used as said welding wire (12).

4. A method according to any one of claims 1 to 3, **characterized in that** the sheet metals (3) are superimposed and pressed against each other by a clamping device (6).

5. A method according to any one of claims 1 to 4, **characterized in that** the energy of the laser process is adapted to the sheet metal thickness and/or the welding requirements.

6. A method according to any one of claims 1 to 5, **characterized in that** the laser process is adjusted in a manner that the focus (47) of the laser (13) is located on the surface (41) of the first sheet metal (3), viewed from the laser (13).

7. A method according to any one of claims 1 to 6, **characterized in that** the shielding gas welding process is activated or deactivated simultaneously with, or subsequently to, the laser process.

8. A laser hybrid welding torch for welding coated sheet metals (3) and/or structural components with at least one laser (13) or a laser optics, and at least one shielding gas unit (5), a welding wire (12), and a wire feeder (11) for a welding wire (12), wherein a clamping device (6) is provided for the substantially gap-free positioning of the coated sheet metals (3) or structural components, **characterized in that** the shielding gas unit (5) is comprised of a MIG/MAG welding torch for conducting a cold-metal-transfer welding process, with a forward/rearward movement of the welding wire (12) being realizable, and with the energy input via the shielding gas welding process being reduceable because of the droplet detachment being effected by the rearward movement of the welding wire (12), and that a material having a zinc and/or carbon and/or aluminum content is used as the welding wire (12).

9. A laser hybrid welding torch according to claim 8 in combination with sheet metals (3), **characterized in that** the sheet metals (3) are formed with a zinc coating.

10. A laser hybrid welding torch according to claim 8 or 9, **characterized in that** the clamping device (6) is comprised of an external clamping device.

11. A laser hybrid welding torch according to any one of claims 8 to 10, **characterized in that** the clamping device (6) is arranged on the welding head (1).

12. A laser hybrid welding torch according to any one of claims 8 to 11, **characterized in that** the clamping device (6) is comprised of a roller (7) and a clamping strap (8).

13. A laser hybrid welding torch according to any one of claims 8 to 12, **characterized in that** the laser (13) is comprised of an eximer laser (e.g. ArF, KrF, XeCl), a solid state-type laser (e.g. ruby, Nd:YAG, Nd-glass), a semiconductor-type laser (GaAs, GaAlAs) or a gas laser (CO₂).

## Revendications

1. Procédé de soudage de tôles revêtues (3) au moyen d'un procédé de soudage hybride au laser, où au moins un processus de soudage au laser et un processus de soudage sous protection gazeuse sont exécutés, un métal d'apport (12) étant amené au point de soudage dans le cadre du processus de soudage sous protection gazeuse, et les tôles revêtues (3) étant positionnées essentiellement sans interstice l'une contre l'autre,
**caractérisé en ce que**
l'on met en oeuvre, en tant que processus de soudage sous protection gazeuse, un processus de soudage MIG/MAG à transfert de métal froid, où un mouvement alternatif d'avance/de recul du fil de soudure (12) est effectué, l'énergie introduite par l'intermédiaire du processus de soudage sous protection gazeuse étant réduite, puisque le détachement des gouttelettes se fait en raison du mouvement de recul du fil de soudure (12),
et que l'on utilise, en tant que métal d'apport pour le processus de soudage sous protection gazeuse, un fil de soudure (12) ayant une teneur donnée en zinc et/ou en carbone et/ou en aluminium.

2. Procédé selon la revendication 1,
**caractérisé en ce que**
le fil de soudure (12) comporte les composants zinc, carbone et aluminium.

3. Procédé selon les revendications 1 ou 2,
**caractérisé en ce que**
le fil de soudure (12) est un fil fourré ayant la dénomination SAF DUAL ZN.

4. Procédé selon l'une des revendications 1 à 3,
**caractérisé en ce que**
les tôles (3) sont positionnées les unes au-dessus des autres et sont plaquées l'une sur l'autre par l'intermédiaire d'un dispositif de serrage (6).

5. Procédé selon l'une des revendications 1 à 4,
**caractérisé en ce que**
l'énergie du processus au laser est adaptée à l'épaisseur des tôles, voire aux contraintes de la soudure.

6. Procédé selon l'une des revendications 1 à 5,
**caractérisé en ce que**
le processus au laser est réglé de telle manière que le point focal (47) du laser (13) se situe à la surface (41) de la première tôle (3) vue par le laser (13).

7. Procédé selon l'une des revendications 1 à 6,
**caractérisé en ce que**
le processus de soudage sous protection gazeuse est activé et désactivé simultanément avec le processus au laser, ou après le processus au laser.

8. Torche de soudage hybride au laser, pour le soudage de tôles ou de composants revêtu(e)s (3), comprenant au moins un laser (13) ou un système optique de laser et au moins une unité (5) d'apport de gaz de protection, un fil de soudure (12), et un dispositif (11) de transport de fil pour un fil de soudure (12),
un dispositif de serrage (6) étant prévu pour assurer le positionnement essentiellement sans interstice des tôles ou composants revêtu(e)s (3),
**caractérisée en ce que**
l'unité (5) d'apport de gaz de protection est constituée par une torche de soudage MIG/MAG conçue pour effectuer un processus de soudage à transfert de métal froid, processus de soudage à transfert de métal froid au cours duquel un mouvement alternatif d'avance et de recul du fil de soudure (12) peut être effectué, et où l'énergie introduite par l'intermédiaire du processus de soudage sous protection gazeuse peut être réduite, puisque le détachement des gouttelettes se fait en raison du mouvement de recul du fil de soudure (12),
et **en ce que** le fil de soudure (12) est une matière ayant une teneur donnée en zinc et/ou en carbone et/ou en aluminium.

9. Torche de soudage hybride au laser selon la revendication 8, en combinaison avec des tôles (3),
**caractérisée en ce que**
les tôles (3) sont configurées avec un revêtement de zinc.

10. Torche de soudage hybride au laser selon les revendications 8 ou 9,
**caractérisée en ce que**
le dispositif de serrage (6) est constitué par un dispositif de serrage externe.

11. Torche de soudage hybride au laser selon l'une des revendications 8 à 10,
**caractérisée en ce que**
le dispositif de serrage (6) est monté sur la tête de soudage (1).

12. Torche de soudage hybride au laser selon l'une des revendications 8 à 11,
**caractérisée en ce que**
le dispositif de serrage (6) est constitué par un rouleau (7) et un étrier de serrage (8).

13. Torche de soudage hybride au laser selon l'une des revendications 8 à 12,
**caractérisée en ce que**
le laser (13) est constitué par un laser excimer (par exemple du ArF, KrF, XeCI), un laser à solide (par exemple au rubis, Nd:YAG, Nd-verre), un laser à semi-conducteur (GaAs, GaAlAs), ou un laser au gaz (CO₂).
